**Europäisches Patentamt**

**European Patent Office**

**Office européen des brevets**

(19)

(11) Publication number : **0 528 924 B1**

## EUROPEAN PATENT SPECIFICATION

(12)

(45) Date of publication of patent specification :
**03.11.93 Bulletin 93/44**

(51) Int. Cl.⁵ : **G01R 27/22, D06L 3/02, C01B 15/01**

(21) Application number : **91909558.8**

(22) Date of filing : **14.05.91**

(86) International application number :
**PCT/NL91/00079**

(87) International publication number :
**WO 91/18296 28.11.91 Gazette 91/27**

(54) **METHOD AND APPARATUS FOR BLEACHING TEXTILE WEBS.**

(30) Priority : **14.05.90 NL 9001133**

(43) Date of publication of application :
**03.03.93 Bulletin 93/09**

(45) Publication of the grant of the patent :
**03.11.93 Bulletin 93/44**

(84) Designated Contracting States :
**AT BE CH DE DK ES FR GB GR IT LI LU NL SE**

(56) References cited :
**CH-A- 431 444**
**Textilveredlung, vol. 17, no. 7, 1982, (Basel, CH), M. Jola: "Uber die thermometrische On-line-Messung und Regelung von Peroxid-Bleichbädern", pages 284-289**

(73) Proprietor : **BRUGMAN MACHINEFABRIEK B.V.**
**15 Kolthofsingel**
**NL-7600 AH ALMELO (NL)**

(72) Inventor : **RAVENSBERGEN, Daniel, Wouter**
**Bosdreef 34**
**NL-2352 BC Leiderdorp (NL)**

(74) Representative : **de Bruijn, Leendert C. et al**
**Nederlandsch Octrooibureau**
**Scheveningseweg 82 P.O. Box 29720**
**NL-2502 LS Den Haag (NL)**

## Description

The invention relates to a method for determining hydroxyl ion and hydrogen peroxide concentration ($[OH^-]$ and $[H_2O_2]$) in a bleaching bath which contains at least a solution of hydroxide and hydrogen peroxide in water.

In this description, the hydroxyl ion concentration is in general understood to mean the total $OH^-$ ion concentration in mol per litre.

In the textile industry, textile webs are subjected to diverse treatments before they are processed to produce finished products. Usually at least one of these treatments comprises passing the textile web through a so-called bleaching liquor, the textile web being impregnated with chemicals which are contained in the bleaching liquor. This usually involves baths which contain an oxidising agent such as hydrogen peroxide and an hydroxide such as sodium hydroxide. In addition, stabilisers, which may entail organic compounds or, for example, water glass, are often present.

In order, in the said treatment, to guarantee a constant product quality and to make optimum use of chemicals without an unnecessary pollution of the environment occurring, a good regulation of the bath concentration is desirable. Lack of uniformity in the product quality may not only cause immediate problems during the production but also problems at a later stage.

An excess of absorbed chemicals has to be removed later from the cloth, which is costly and, in addition, may give rise to undesirable environmental effects.

It is therefore of great importance to be able to determine and to be able to (re)adjust the hydroxide and hydrogen peroxide concentration in bleaching baths in the desired manner during the treatment of textile webs.

It is known to measure the bath concentration by means of manual or automatic titration. However, this method is laborious and often inaccurate. In addition, the titration method is not suitable for continuously measuring bath concentrations.

Textilveredlung 17 (1982), No. 7, pages 284-289 discloses a method for the thermometric on-line measurement and regulation of peroxide-containing bleaching baths. The method is based on measuring the heat liberated in the exothermal oxidation of peroxide. The use of a sodium hypochlorite solution is recommended in this connection. However, the measurement has the disadvantage that inaccurate values may occur.

It has now been found that the said bath concentration in the bleaching bath or liquid originating therefrom can be determined from the easily measurable parameters of conductivity G, pH and the temperature if it is not constant in the bleaching bath.

The invention therefore relates to a method for determining the hydroxyl ion and hydrogen peroxide concentration $[OH^-]$ and $[H_2O_2]$ in a bleaching bath which contains at least a solution of hydroxide and hydrogen peroxide in water, wherein the following parameters, which are related to $[OH^-]$ and $[H_2O_2]$, are measured in the bleaching bath or liquid originating therefrom:

- the conductivity G,
- the pH and
- the temperature T.

The parameters determined according to the method of the invention yield the hydroxyl and hydrogen peroxide concentration present at the instant of the measurement by calculation. Said calculation is carried out on the basis of the following scheme, in which the temperature is set at T°C during the measurement and sodium hydroxide is used as a representative example of hydroxide.

$$G_R = G_T \cdot (1.008)^{(25-T)}, \text{ where} \qquad (I)$$

$G_R$ is the conductivity in mS at 25°C and
$G_T$ is the conductivity in mS at T°C.

$$pH_R = pH_T + (25-T).(-0.019) \qquad (II)$$

where $pH_R$ is the pH at 25°C and
$pH_T$ is the pH at T°C.

$$\Lambda_{NaOOH} = 63.9 + (-0.5554).G_R \qquad (III)$$

where $\Lambda_{NaOOH}$ is the molar conductivity of NaOOH.

$$G \text{ system} = G_R - G^*, \qquad (IV)$$

where $G^*$ is the conductivity in mS due to ions which do not belong to the system, in general carbonate ions.

$$[OH^-] = 10^{pH_R - 14}, \qquad (V)$$

$$[OOH^-] = \frac{G \text{ system} - 200.[OH^-]}{\Lambda_{NaOOH}} \qquad (VI)$$

where $[OH^-]$, $[OOH^-]$ and $[H_2O_2]$ in the formulae V and VI represent the equilibrium concentrations.

$$[H_2O_2] = K_1 \cdot \frac{[OOH^-]}{[OH^-]} \qquad (VII)$$

where $K_1$ is the dissociation constant of the equilibrium

$$OOH^- + H_2O \rightleftharpoons H_2O_2 + OH^-. \qquad (VIII)$$

The $[OH^-]$, $[OOH^-]$ and $[H_2O_2]$ can therefore be determined from the above formulae V-VII. The amount of NaOH or $H_2O_2$, respectively, is calculated as follows:

$$\text{amount of NaOH (g/l)} = ( [OH^-] + [OOH^-] ).40 \qquad (IX)$$
$$\text{amount of } H_2O_2 \text{ (g/l)} = ( [OOH^-] + [H_2O_2] ).34 \qquad (X)$$

where 40 and 34 are the molecular weights of NaOH and $H_2O_2$.

The abovementioned method of calculation explained above on the basis of the equations I-X can only be carried out if the constants $K_1$ and $G^*$ are known for the bleaching system concerned. These constants have in practice to be determined by calibration for every bleaching system based on hydroxide and $H_2O_2$. This is done by carrying out a chemical (titrimetric) analysis, the peroxide, hydroxide and carbonate concentration being determined. From this the theoretical conductivity can be calculated for the system. The difference between the measured conductivity and the theoretical conductivity is considered to be the conductivity $G^*$.

$K_1$ can be determined from the analytical result and the pH measurement with the aid of the dissociation equation VIII.

$$[OH^-] = 10^{pH-14} \qquad (XI)$$
$$[OOH^-] = A - [OH^-] \qquad (XII)$$
$$[H_2O_2] = B - [OOH^-] \qquad (XIII)$$

A  = mol/litre hydroxide as analysed.

B  = mol/litre peroxide as analysed.

The three equilibrium concentrations obtained in this way are substituted in equation VII, which yields $K_1$.

It is self-evident that the said calculation based on the equations I-X can be carried out in a simple manner with the aid of a microprocessor and a suitable program, only the values of the pH, the conductivity and the (measured) temperature having to be entered in the microprocessor.

The metered addition of hydroxide and hydrogen peroxide to the bleaching bath can be carried out in an expedient manner, for example continuously, on the basis of the results of the determination of the hydroxyl and hydrogen peroxide concentrations carried out according to the invention.

The invention therefore also relates to a method for regulating the $[OH^-]$ and $[H_2O_2]$ in a bleaching bath which contains at least a solution of hydroxide and hydrogen peroxide, wherein the said concentrations in the bleaching bath are determined according to the method described above and the metered addition of hydroxide and hydrogen peroxide is adjusted on the basis of the results of said determination.

The invention also relates to a method for treating a textile web in a bleaching bath which contains at least a solution of hydroxide and hydrogen peroxide in water, wherein the $[OH^-]$ and $[H_2O_2]$ in the bleaching bath from which the textile web absorbs liquid are regulated according to the method described above.

Moreover, the invention comprises an apparatus for treating a textile web, comprising
- a vat which can be used as a bleaching bath, such as an impregnating apparatus, for example a padding machine or a roller vat,
- means for passing the textile web through the bleaching bath,
- means for feeding solutions of hydroxide and hydrogen peroxide, comprising reservoirs for the said solutions and metering devices,
- measuring equipment for measuring the conductivity, pH and possibly the temperature in the bleaching bath,

wherein the measuring equipment is connected to the metering devices via a microprocessor.

The bleaching baths which are used according to the method or apparatus of the invention preferably contain an organic stabiliser which is known per se. However, other stabilisers do not necessarily interfere with the determination according to the invention either. Thus, for example, water glass can be present in the bleaching bath, it also being possible to use the methods of determination according to the invention, in particular if work is carried out within reasonable limits around the formulation used in the industry and $K_1$ and $G^*$ are at the same time determined by calibration.

It has furthermore been found that the method according to the invention is not adversely affected to any appreciable extent by the presence of carbonate in the bleaching baths. Said carbonate is often present (in minor amounts) in bleaching baths because the basic baths absorb carbon dioxide from the ambient air.

The invention is illustrated with reference to a continuous test carried out with a bleaching bath used in the industry.

The results of the measurements, analyses and calculations are shown in Tables A, B and C.

In said continuous test, the following values apply: $K_1 = 0.0019$ and $G^* = 2.02$ mS.

3

## Table A

### Bleaching bath measurement and analytical results

| | Measured | | | | | Analysed | | |
| date | time | $pH_T$ | $G_T$ (mS) | T (°C) | | peroxide (g/l) | hydroxide (g/l) | soda (g/l) |
|---|---|---|---|---|---|---|---|---|
| 3/10/89 | 12:09 | 10.81 | 16.6 | 31.0 | | 30.94 | 9.66 | 2.15 |
| 3/10/89 | 14:11 | 10.87 | 21.8 | 32.3 | | 33.51 | 12.99 | 2.70 |
| 3/10/89 | 15:15 | 10.97 | 19.7 | 28.3 | | 30.10 | 10.85 | 3.08 |
| 3/10/89 | 15:49 | 10.93 | 20.1 | 28.9 | | 32.95 | 11.59 | 2.92 |
| 4/10/89 | 13:49 | 10.88 | 14.5 | 28.6 | | 22.97 | 7.94 | 1.78 |
| 4/10/89 | 14:34 | 10.89 | 16.1 | 29.6 | | 24.81 | 8.62 | 2.41 |
| 4/10/89 | 15:18 | 10.89 | 15.9 | 30.1 | | 23.98 | 8.71 | 2.10 |
| 4/10/89 | 15:47 | 10.82 | 15.4 | 32.1 | | 24.02 | 8.37 | 2.12 |
| 6/10/89 | 11:00 | 10.8?) | 17.2 | 33.5 | | 27.09 | 10.45 | 2.62 |
| 9/10/89 | 14:45 | 10.7?) | 18.2 | 27.3 | | 33.07 | 10.29 | 2.58 |
| 10/10/89 | 14:45 | 10.9?) | 13.6 | 25.6 | | 26.61 | 8.39 | 2.08 |
| 11/10/89 | 13:15 | 10.8?) | 15.5 | 35.0 | | 27.74 | 9.00 | 2.00 |
| 12/10/89 | 13:50 | 10.8?) | 18.9 | 29.8 | | 31.75 | 11.44 | 2.12 |
| 17/10/89 | 10:20 | 10.67 | 19.3 | 34.3 | | 34.24 | 12.05 | 1.92 |
| 19/10/89 | 11:45 | 10.74 | 16.5 | 28.3 | | 31.81 | 10.65 | 1.33 |
| 19/10/89 | 14:00 | 10.80 | 14.9 | 26.0 | | 28.58 | 9.44 | 1.47 |
| 20/10/89 | 13:30 | 10.86 | 16.5 | 30.4 | | 25.12 | 10.40 | 1.81 |
| 24/10/89 | 8:10 | 10.91 | 16.7 | 37.5 | | 24.04 | 10.75 | 2.01 |
| 24/10/89 | 13:25 | 10.82 | 18.3 | 28.6 | | 34.21 | 12.00 | 1.75 |
| 25/10/89 | 15:40 | 10.82 | 17.3 | 28.2 | | 31.69 | 11.20 | 1.77 |
| 26/10/89 | 15:30 | 10.78 | 13.9 | 29.6 | | 25.48 | 8.70 | 2.74 |
| 31/10/89 | 15.35 | 10.72 | 16.0 | 28.0 | | 32.17 | 9.78 | 1.90 |

?) The pH has been read off only to one decimal point during the sampling on 6th, 9th, 10th, 11th and 12th October.

$pH_T$ : pH measured at the temperature (°C) of the liquor.

$G_T$ : Conductivity measured at the temperature of the liquor.

## Table B

### Calculated equilibrium constant $K_1$ and correction to the conductivity G*

| date | time | $pH_R$ (25°C) | $G_R$ (mS) | $K_1$ | G* (mS) |
|------|------|------|------|------|------|
| 3/10/89 | 12:09 | 10.92 | 15.83 | 0.0022 | 2.16 |
| 3/10/89 | 14.11 | 11.01 | 20.57 | 0.0020 | 3.13 |
| 3/10/89 | 15.15 | 11.03 | 19.19 | 0.0023 | 4.32 |
| 3/10/89 | 15.49 | 11.00 | 19.48 | 0.0023 | 3.68 |
| 4/10/89 | 13:49 | 10.95 | 14.09 | 0.0021 | 2.64 |
| 4/10/89 | 14:34 | 10.98 | 15.52 | 0.0022 | 3.23 |
| 4/10/89 | 15:18 | 10.99 | 15.27 | 0.0021 | 2.85 |
| 4/10/89 | 15:47 | 10.95 | 14.55 | 0.0021 | 2.52 |
| 6/10/89 | 11:00 | 10.96 | 16.07 | 0.0018 **) | 1.31 |
| 9/10/89 | 14:45 | 10.74 | 17.87 | 0.0015 **) | 3.52 |
| 10/10/89 | 14:45 | 10.91 | 13.54 | 0.0022 **) | 1.36 |
| 11/10/89 | 13:15 | 10.99 | 14.31 | 0.0025 **) | 1.38 |
| 12/10/89 | 13:50 | 10.89 | 18.19 | 0.0017 **) | 2.45 |
| 17/10/89 | 10:20 | 10.85 | 17.92 | 0.0016 | 1.33 |
| 19/10/89 | 11:45 | 10.80 | 16.07 | 0.0016 | 1.16 |
| 19/10/89 | 14:00 | 10.82 | 14.78 | 0.0017 | 1.34 |
| 20/10/89 | 13:30 | 10.96 | 15.81 | 0.0017 | 1.16 |
| 24/10/89 | 8:10 | 11.15 | 15.12 | 0.0023 | -0.14 |
| 24/10/89 | 13:25 | 10.89 | 17.78 | 0.0018 | 1.26 |
| 25/10/89 | 15:40 | 10.88 | 16.86 | 0.0017 | 1.27 |
| 26/10/89 | 15:30 | 10.87 | 13.40 | 0.0017 | 0.67 |
| 31/10/89 | 15:35 | 10.78 | 15.62 | 0.0017 | 1.76 |

**) The calculated values for $K_1$ on 6th, 9th, 10th, 11th and 12th October must be ignored because the pH has not been read off with sufficient accuracy in these cases.

$pH_R$ : pH converted to 25°C.
$G_R$ : conductivity converted to 25°C.
$K_1$ : calculated hydroxide/peroxide equilibrium constant.
G* : calculated correction to the conductivity for ions not belonging to the system (soda and the like).

## Table C

Comparison of the analytical and the calculated results

$K_1 = 0.0019$

$G* = 2.02$ mS

| date | time | analysis | | calculated | |
|---|---|---|---|---|---|
| | | peroxide (g/l) | hydroxide (g/l) | peroxide (g/l) | hydroxide (g/l) |
| 3/10/89 | 12:09 | 31 | 10 | 27 | 10 |
| 3/10/89 | 14:11 | 34 | 13 | 34 | 14 |
| 3/10/89 | 15:15 | 30 | 11 | 30 | 13 |
| 3/10/89 | 15:49 | 33 | 12 | 32 | 13 |
| 4/10/89 | 13:49 | 23 | 8 | 23 | 8 |
| 4/10/89 | 14:34 | 25 | 9 | 25 | 10 |
| 4/10/89 | 15:18 | 24 | 9 | 24 | 9 |
| 4/10/89 | 15:47 | 24 | 8 | 23 | 9 |
| 6/10/89 | 11:00 | 27 | 10 | 26 **) | 10 |
| 9/10/89 | 14:45 | 33 | 10 | 44 **) | 12 |
| 10/10/89 | 14:45 | 27 | 8 | 23 **) | 8 |
| 11/10/89 | 13:15 | 28 | 9 | 22 **) | 9 |
| 12/10/89 | 13:50 | 32 | 11 | 35 **) | 12 |
| 17/10/89 | 10:20 | 34 | 12 | 37 | 12 |
| 19/10/89 | 11:45 | 32 | 11 | 34 | 10 |
| 19/10/89 | 14:00 | 29 | 9 | 30 | 9 |
| 20/10/89 | 13:30 | 25 | 10 | 26 | 10 |
| 24/10/89 | 8:10 | 24 | 11 | 18 | 9 |
| 24/10/89 | 13:25 | 34 | 12 | 34 | 12 |
| 25/10/89 | 15:40 | 32 | 11 | 32 | 11 |
| 26/10/89 | 15:30 | 25 | 9 | 24 | 8 |
| 31/10/89 | 15:35 | 32 | 10 | 34 | 10 |

**) As a consequence of reading off the pH to one decimal place, these calculated values cannot be included in the error consideration.

## Claims

1. Method for determining the hydroxyl ion and hydrogen peroxide concentration [OH$^-$] and [H$_2$O$_2$] in a bleaching bath which contains at least a solution of hydroxide and hydrogen peroxide in water, wherein the following parameters, which are related to [OH$^-$] and [H$_2$O$_2$], are measured in the bleaching bath or liquid originating therefrom:
   - the conductivity G,
   - the pH and
   - the temperature T.

2. Method for regulating the [OH$^-$] and [H$_2$O$_2$] in a bleaching bath which contains at least a solution of hydroxide and hydrogen peroxide, wherein the said concentrations in the bleaching bath are determined according to the method of Claim 1 and the metered addition of hydroxide and hydrogen peroxide is adjusted on the basis of the results of said determination.

3. Method for treating a textile web in a bleaching bath which contains at least a solution of hydroxide and hydrogen peroxide in water, wherein the [OH$^-$] and [H$_2$O$_2$] in the bleaching bath from which the textile web absorbs liquid are regulated according to the method of Claim 2.

4. Apparatus for treating a textile web, comprising
   - a bleaching bath,
   - means for passing the textile web through the bleaching bath,
   - means for feeding solutions of hydroxide and hydrogen peroxide, comprising reservoirs for the said solutions and metering devices,
   - measuring equipment for measuring the conductivity, pH and possibly the temperature in the bleaching bath,
   - wherein the measuring equipment is connected to the metering devices via a microprocessor.

## Patentansprüche

1. Verfahren zur Bestimmung der Hydroxylionen- und Wasserstoffperoxidkonzentration [OH$^-$] und [H$_2$O$_2$] in einem zumindest eine Lösung eines Hydroxids und von Wasserstoffperoxid in Wasser enthaltenden Bleichbad, wobei die folgenden, zu [OH$^-$] und [H$_2$O$_2$] in Bezug stehenden Parameter in dem Bleichbad oder einer daraus herrührenden Flüssigkeit gemessen werden:
   Die Leitfähigkeit G
   der pH-Wert und
   die Temperatur T

2. Verfahren zur Steuerung von [OH$^-$] und [H$_2$O$_2$] in einem zumindest eine Lösung eines Hydroxids und von Wasserstoffperoxid enthaltenden Bleichbad, wobei die Konzentrationen in dem Bleichbad nach dem Verfahren gemäß Anspruch 1 bestimmt und die dosierte Zugabe von Hydroxid und Wasserstoffperoxid auf der Basis der Ergebnisse dieser Bestimmung eingestellt werden.

3. Verfahren zum Behandeln eines Textilgewebes in einem zumindest eine Lösung eines Hydroxids und von Wasserstoffperoxid in Wasser enthaltenden Bleichbad, wobei [OH$^-$] und [H$_2$O$_2$] in dem Bleichbad, aus dem das Textilgewebe Flüssigkeit absorbiert, nach dem Verfahren gemäß Anspruch 2 gesteuert werden.

4. Vorrichtung zum Behandeln eines Textilgewebes, umfassend
   ein Bleichbad,
   eine Einrichtung zum Hindurchführen des Textilgewebes durch das Bleichbad,
   eine Einrichtung zur Zufuhr von Hydroxid- und Wasserstoffperoxidlösungen mit Reservoiren für die betreffenden Lösungen und Dosiereinrichtungen,
   eine Meßeinrichtung zum Messen der Leitfähigkeit, des pH-Werts und möglicherweise der Temperatur in dem Bleichbad,
   wobei die Meßeinrichtung an die Dosiereinrichtung über einen Mikroprozessor angeschlossen ist.

**Revendications**

1.  Procédé de détermination de la concentration en ions hydroxyle et en peroxyde d'hydrogène [OH⁻] et [H₂O₂] dans un bain de blanchiment contenant au moins une solution aqueuse d'hydroxyde et de peroxyde d'hydrogène, dans lequel les paramètres suivants, qui sont liés à [OH⁻] et [H₂O₂], sont mesures dans le bain de blanchiment ou le liquide en provenant :
    - la conductivité G,
    - le pH et
    - la température T.

2.  Procédé de régulation de [OH⁻] et [H₂O₂] dans un bain de blanchiment contenant au moins une solution d'hydroxyde et de peroxyde d'hydrogène, dans lequel lesdites concentrations dans le bain de blanchiment sont déterminées selon le procédé de la revendication 1 et l'addition dosée d'hydroxyde et de peroxyde d'hydrogène est réglée en fonction des résultats de ladite détermination.

3.  Procédé de traitement d'une bande de tissu dans un bain de blanchiment contenant au moins une solution aqueuse d'hydroxyde et de peroxyde d'hydrogène, dans lequel [OH⁻] et [H₂O₂] dans le bain de blanchiment à partir duquel la bande de tissu absorbe le liquide sont régulés selon le procédé de la revendication 2.

4.  Dispositif de traitement d'une bande de tissu, comportant :
    - un bain de blanchiment,
    - des moyens pour faire passer la bande de tissu à travers le bain de blanchiment,
    - des moyens pour délivrer des solutions d'hydroxyde et de peroxyde d'hydrogène, comportant des réservoirs pour lesdites solutions et des dispositifs de dosage,
    - un équipement de mesure pour mesurer la conductivité, le pH et éventuellement la température du bain de blanchiment,
    - dans lequel l'équipement de mesure est relié aux dispositifs de dosage par l'intermédiaire d'un microprocesseur.